# EUROPEAN PATENT SPECIFICATION

(11) **EP 3 320 700 B1**
(45) Date of publication and mention of the grant of the patent: **17.04.2019**
(21) Application number: 16730121.7
(22) Date of filing: 27.05.2016
(51) Int. Cl.: H04W 4/14, H04W 4/50, H04W 4/12, H04W 4/16, H04L 12/58

(54) **TECHNIQUES FOR IMPROVED SHORT MESSAGE SERVICES**
TECHNIKEN FÜR VERBESSERTE KURZNACHRICHTENDIENSTE
TECHNIQUES POUR DES SERVICES D'ENVOI DE MESSAGES COURTS AMÉLIORÉS

(30) Priority: 10.07.2015 US 201514796663
(43) Date of publication of application: 16.05.2018
(73) Proprietor: Qualcomm Incorporated, San Diego, CA 92121-1714 (US)
(72) Inventor: ALAVALA, Nagarjuna Reddy, San Diego, California 92121-1714 (US); VADDADI, Mohan Sree Bhadra Saithej, San Diego, California 92121-1714 (US); NELUROUTH, Rajendra Prasad, San Diego, California 92121-1714 (US); PATHIKONDA, Kedarnath, San Diego, California 92121-1714 (US)
(74) Representative: Dunlop, Hugh Christopher
(86) International application number: PCT/US2016/034762
(87) International publication number: WO 2017/011081

(56) References cited:
- EP-A1- 1 246 486
- WO-A2-98/35516
- KR-A- 20100 064 487
- US-A1- 2013 023 228
- "3 Generation Partnership Project; Technical Specification Group Services and System Aspects; Service aspects; Service principles (Release 14)", 3GPP STANDARD; 3GPP TS 22.101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V14.0.0, 26 June 2015 (2015-06-26), pages 1-92, XP050966080, [retrieved on 2015-06-26]
- "3rd Generation Partnership Project; Technical Specification Group Terminals Specification of the Subscriber Identity Module - Mobile Equipment (SIM - ME) interface (Release 1999)", 3GPP STANDARD; 3GPP TS 11.11, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.14.0, 1 June 2007 (2007-06-01), pages 1-178, XP050359891,
- RESEARCH IN MOTION UK LTD ET AL: "For FDN, remove the check of SMSC Address", 3GPP DRAFT; S1-133035, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. New Delhi, India; 20130506 - 20130510 25 April 2013 (2013-04-25), XP050707540, Retrieved from the Internet: URL:http://www.3gpp.org/ftp/tsg_sa/WG1_Ser v/TSGS1_62_New_Delhi/docs/ [retrieved on 2013-04-25]
- VODAFONE: "FDN procedures. For discussion", 3GPP DRAFT; C6-050858, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG6, no. Sophia Antipolis, France; 20051110, 10 November 2005 (2005-11-10), XP050043172, [retrieved on 2005-11-10]
- VODAFONE: "Correction of FDN feature to allow all capabilities (including SMS and Packet services) to be excluded from the FDN check in a secure way", 3GPP DRAFT; C6-080288, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Povoa de Varzim, Portugal; 20080829, 29 August 2008 (2008-08-29), XP050316036, [retrieved on 2008-08-29]

## Description

### INTRODUCTION

This disclosure relates generally to electronics, and more specifically, but not exclusively, to methods and apparatuses relating to mobile-originated short message services.

Short Message Service (SMS) is a standardized communication service used in mobile communication systems. Using standardized communications protocols, SMS provides for an interchange of short text messages between communication devices. SMS text messaging has become one the most widely used data applications. One of the reasons for SMS's popularity is the relative simplicity of communication network infrastructure necessary to support SMS.

When a sender attempts to send an SMS message, the sender inputs a unique identifier assigned to the intended recipient and/or recipient's communication device (e.g., a phone number, email address, or other identifier or the recipient or recipient's communication device), as well as a short text message payload. The short text message payload is typically limited to 160 7-bit characters, 140 8-bit characters, or 70 16-bit characters (including spaces), and can be encoded from a variety of alphabets.

When the sender executes a send command for the inputted SMS message, the sender's communication device transmits the SMS message over an air interface to a base station that is operating within a service provider's communication network. The base station relays the SMS message to a short message service center (SMSC) supporting SMS communications for the service provider's network.

A fixed dialing number (FDN) list is a list enabling a fixed dialing feature (e.g., the FDN mode) on a user communication device. The fixed dialing feature is a mechanism implementing an electronic lock to bar a sender's communication device from calling certain destination numbers (e.g., those that are pre-programmed on the FDN list). The FDN feature may be set by an administrator or supervisory (e.g., an organization, parent, etc.) such that the sender (e.g., a child, an employee, etc.) may not be able to disable the FDN mode of the sender's communication device and/or make changes to the FDN list at the communication device.

Accordingly, there are long-felt industry needs for methods and apparatus that improve upon conventional methods and apparatus, including the provided improved methods and improved apparatus disclosed hereby.
"3 Generation Partnership Project; Technical Specification Group Services and System Aspects; Service aspects; Service principles (Release 14)", 3GPP STANDARD; 3GPP TS 22.101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. VI4.0.0, 26 June 2015 (2015-06-26), pages 1-92, XP050966080 describes 3GPP technical specifications group services and system aspects.
WO98/35516 describes data store for a mobile radio station.
KR2010 0064487 describes a last mobile management system for onboard roaming. US2013/023228 describes wireless ECALL devices and ECALL service subscription management.
RESEARCH IN MOTION UK LTD ET AL: "For FDN, remove the check of SMSC Address", 3GPP DRAFT; SI-133035, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX ; FRANCE, vol. SA WG1, no. New Delhi, India; 20130506 - 20130510 25 April 2013 (2013-04-25), XP050707540 describes removing the check of SMSC address for FDN.
GB 2389272 describes remote reconfiguration of a SIM.
EP 1777972 describes a method and arrangement for enabling payments over a mobile telecommunication network.

### SUMMARY

This summary provides a basic understanding of some aspects of the present teachings. This summary is not exhaustive in detail, and is neither intended to identify all critical features, nor intended to limit the scope of the claims.

Exemplary methods and apparatus for improving Short Message Service (SMS) availability by mobile equipment (ME) are provided. An exemplary method includes determining the ME has a Fixed Dialing Number (FDN) list, optionally receiving an over-the-air (OTA) update identifying a change in a Short Message Service Center (SMSC) address, and automatically updating the SMSC address in the ME's FDN list. The OTA update can be due to a service provider changing the SMSC address, the ME roaming in a network that is not the home network of the ME, or a combination thereof. In a first case, when the ME is in a home network, an OTA update is not necessary, and the SMSC address is automatically updated in the ME's FDN list. In a second case, when the service provider changes the SMSC address using an OTA, the SMSC address communicated by the OTA update is automatically updated in the ME's FDN list. In a third case, when the ME is roaming in a network that is not the ME's home network and an OTA update is received, the SMSC address communicated by the OTA update is automatically updated in the ME's FDN list. Automatically updating the SMSC address in the FDN list enables a user of the ME to send an MO-SMS seamlessly (the user need not manually enter the SMSC address every time an SMS is to be sent), even when the ME's FDN mode is enabled. The method can further include detecting that the ME has an FDN mode enabled. The method can further include transmitting an SMS message using the updated the SMSC address. The method can further include presenting, via a user interface, a user notification stating that the SMSC address is updated. The updating of the SMSC address in the ME's FDN list can include adding the SMSC address to the ME's FDN list. In a further example, provided is a non-transitory computer-readable medium, comprising processor-executable instructions stored thereon that are configured to cause a processor to execute at least a part of the aforementioned method. The non-transitory computer-readable medium can be integrated with a device, such as a mobile device, a communications device, a computer, or a combination of the foregoing.

In another example, provided is an apparatus configured to improve Short Message Service (SMS) availability by mobile equipment (ME). The apparatus includes means for determining the ME has a Fixed Dialing Number (FDN) list, optional means for receiving an over-the-air (OTA) update identifying a change in a Short Message Service Center (SMSC) address due to the ME roaming, and means for automatically updating the SMSC address in the ME's FDN list. The OTA update can be due to a service provider changing the SMSC address, the ME roaming in a network that is not the home network of the ME, or a combination thereof. In a first case, when the ME is in a home network, an OTA update is not necessary, and the SMSC address is automatically updated in the ME's FDN list. In a second case, when the service provider changes the SMSC address using an OTA, the SMSC address communicated by the OTA update is automatically updated in the ME's FDN list. In a third case, when the ME is roaming in a network that is not the ME's home network and an OTA update is received, the SMSC address communicated by the OTA update is automatically updated in the ME's FDN list. Automatically updating the SMSC address in the ME's FDN list enables a user of the ME to send an MO-SMS seamlessly (the user need not manually enter the SMSC address every time an SMS is to be sent), even when the ME's FDN mode is enabled.
The apparatus can further include means for detecting that the ME has an FDN mode enabled. The apparatus can further include means for transmitting an SMS message using the updated the SMSC address. The apparatus can further include means for presenting, via a user interface, a user notification stating that the SMSC address is updated. The means for updating of the SMSC address in the ME's FDN list can include means for adding the SMSC address to the ME's FDN list. In an example, at least a part of the means for automatically updating the SMSC address is integrated on a semiconductor die. In another example, the apparatus can further include mobile equipment, of which the means for automatically updating the SMSC is a constituent part. Further, at least a part of the apparatus can include a device, such as a mobile device, a communications device, a computer, or a combination of the foregoing, with a part of the apparatus being a constituent part of the device. In a further example, provided is a non-transitory computer-readable medium, comprising lithographic device-executable instructions stored thereon that are configured to cause a lithographic device to fabricate at least a part of the apparatus.

In another example, provided is an apparatus configured to improve Short Message Service (SMS) availability by mobile equipment (ME). The apparatus includes a processor and a memory coupled to the processor. The memory is configured to cause the processor to initiate causing the ME to determine that the ME has a Fixed Dialing Number (FDN) list, optionally initiate receiving an over-the-air (OTA) update identifying a change in a Short Message Service Center (SMSC) address due to the ME roaming, and initiate automatically updating the SMSC address in the ME's FDN list. The OTA update can be due to a service provider changing the SMSC address, the ME roaming in a network that is not the home network of the ME, or a combination thereof. In a first case, when the ME is in a home network, an OTA update is not necessary, and the SMSC address is automatically updated in the ME's FDN list. In a second case, when the service provider changes the SMSC address using an OTA, the SMSC address communicated by the OTA update is automatically updated in the ME's FDN list. In a third case, when the ME is roaming in a network that is not the ME's home network and an OTA update is received, the SMSC address communicated by the OTA update is automatically updated in the ME's FDN list. Automatically updating the SMSC address in the FDN list enables a user of the ME to send an MO-SMS seamlessly (the user need not manually enter the SMSC address every time an SMS is to be sent), even when the ME's FDN mode is enabled. The memory can be further configured to initiate detecting that the ME has an FDN mode enabled. The memory can be further configured to cause the processor to initiate transmitting an SMS message using the updated the SMSC address. The memory can be further configured to cause the processor to initiate presenting, via a user interface, a user notification stating that the SMSC address is updated. The initiating automatically updating the SMSC address in the ME's FDN list can include initiating adding the SMSC address to the ME's FDN list. In an example, at least a part of the processor is integrated on a semiconductor die. In an example, the apparatus further includes mobile equipment, of which the processor is a constituent part. Further, at least a part of the apparatus can include a device, such as a mobile device, a communications device, a computer, or a combination of the foregoing, with a part of the apparatus being a constituent part of the device. In a further example, provided is a non-transitory computer-readable medium, comprising lithographic device-executable instructions stored thereon that are configured to cause a lithographic device to fabricate at least a part of the apparatus.

The foregoing broadly outlines some of the features and technical advantages of the present teachings in order that the detailed description and drawings can be better understood. Additional features and advantages are also described in the detailed description. The conception and disclosed examples can be used as a basis for modifying or designing other devices for carrying out the same purposes of the present teachings. Such equivalent constructions do not depart from the technology of the teachings as set forth in the claims. The inventive features that are characteristic of the teachings, together with further objects and advantages, are better understood from the detailed description and the accompanying figures. Each of the figures is provided for the purpose of illustration and description only, and does not limit the present teachings.

### BRIEF DESCRIPTION OF THE DRAWINGS

The accompanying drawings are presented to describe examples of the present teachings, and are not limiting.
FIG. 1 depicts an exemplary functional block diagram of an exemplary wireless communication network.
FIG. 2 depicts an exemplary functional block diagram of exemplary mobile equipment.
FIG. 3 depicts an exemplary functional block diagram of an exemplary access point.
FIG. 4 depicts an exemplary method for improving Short Message Service availability by mobile equipment.
FIG. 5 depicts an exemplary simplified block diagram of an exemplary apparatus configured to provide or support techniques provided herein.

In accordance with common practice, the features depicted by the drawings may not be drawn to scale. Accordingly, the dimensions of the depicted features may be arbitrarily expanded or reduced for clarity. In accordance with common practice, some of the drawings are simplified for clarity. Thus, the drawings may not depict all components of a particular apparatus or method. Further, like reference numerals denote like features throughout the specification and figures.

### DETAILED DESCRIPTION

### INTRODUCTION

Methods and apparatus relating to enabling mobile-originated short message services (SMS) concurrently with the use of a fixed dialing number (FDN) feature are provided. Text messages are not sent to an actual recipient number directly, instead they are forwarded through a short message service center (SMSC). Usually, FDN lists include a fixed list of numbers. Usually, for an end user, it's hard to know the SMSC address and thus hard to add SMSC address to the FDN list explicitly. Furthermore, as the SMSC address which is catering the SMS services to the equipment, may change due to various reasons, even if the SMSC address is originally added to an FDN list, at the time of the list creation or periodic update. The FDN list is outdated by not having correct SMSC address, and thus will lead to SMS failure.

When the sender's communication device is roaming in a different service provider's communication network in which the sender is not subscriber, the SMSC address of the roaming service provider's communication network must be added manually to the FDN list of the sender's communication device in order to send the inputted SMS message to the intended recipient's communication device. Further, when the sender's communication device is roaming, the FDN list must have a correct SMSC address (for the service provider's communication network in which the sender is not subscriber) to send an SMS to any of the contacts in FDN list. However, the FDN list may not have the correct SMSC address for the region in which the sender's communication device is roaming. Under these conditions, the sender's communication device cannot send an SMS message to a contact in the FDN list. This lack of reliable connectivity leads to user frustration.

The current method allows for automatically adding/updating the FDN list to include the most up to date SMSC numbers for the numbers on the FDN list.

The provided techniques are beneficial in at least the following scenarios:
1. When a user of mobile equipment (ME) enables an FDN mode having an associated FDN list, an SMSC address for sending SMS messages to the numbers on the FDN list is automatically added (e.g., without the user adding the address) to an FDN list.
2. When the SMSC address is changed, the SMSC address is automatically added to and/or updated on the FDN list (e.g., without the user adding the address and/or updating the list). For example, the SMSC address may change when:
   a. A service provider wants to change an SMSC address, or
   b. the ME moves to another network having a different SMSC address (e.g. roaming in a network that is not the ME's home network).

Adding the SMSC automatically to the ME's FDN list in these scenarios enables the user to send a Mobile-Originated Short Message Service (MO-SMS) message seamlessly - the user need not add an SMSC address manually to send an MO-SMS successfully from the ME, even when an FDN is enabled on the ME.

In an example, a method for improving SMS availability on the ME includes determining the ME has a FDN list, determining the SMSC address associated with the ME's current network and automatically adding the SMSC address to the FDN list. In another example, the FDN list is automatically updated, upon determining a change in the FDN list. For example, a change in SMS address may be detected in response to receiving an over-the-air (OTA) update identifying a change in an SMSC address (e.g., due to the ME roaming), and automatically updating the SMSC address in the FDN list. The updating of the SMSC address in the FDN list can include adding the SMSC address to the FDN list, without replacing another SMSC address, or by replacing the previous SMSC address with the new address. The method can further include detecting that the ME has a FDN mode enabled; transmitting an SMS message using the current SMSC address (e.g. the original or updated SMSC address); presenting, via a user interface (UI), a user notification stating that the SMSC address is updated; or a combination thereof.

At least one of the exemplary apparatuses and/or exemplary methods disclosed herein advantageously addresses the long-felt industry needs, as well as other previously unidentified needs, and mitigates shortcomings of the conventional methods and the conventional apparatus. For example, an advantage provided by at least one example of the disclosed apparatuses and/or at least one example of the methods disclosed herein is an improvement in available connectivity of mobile equipment over conventional devices. Further, an advantage provided by at least one example of the apparatuses and/or at least one example of the methods disclosed herein is that less user programming of mobile equipment is required.

Examples are disclosed in this application's text and drawings. Alternate examples can be devised without departing from the scope of the disclosure. Additionally, conventional elements of the current teachings may not be described in detail, or may be omitted, to avoid obscuring aspects of the current teachings.

### ABBREVIATIONS

The following list of abbreviations, acronyms, and terms is provided to assist in comprehending the current disclosure, and are not provided as limitation.
DL - Downlink
FDM - Fixed Dialing Mode
FDN - Fixed Dialing Number
GTT - Global Text Telephony
ME - Mobile Equipment
MMS - Multimedia Messaging Service
MO-SMS - Mobile-Originated Short Message Service
OTA - Over-The-Air
SIM - Subscriber Identity Module
SMS - Short Message Service
SMSC - Short Message Service Center
UE - User Equipment
UI - User Interface
UL - Uplink.
USIM - Universal Subscriber Identity Module

As used herein, the term "exemplary" means "serving as an example, instance, or illustration." Any example described as "exemplary" is not necessarily to be construed as preferred or advantageous over other examples. Likewise, the term "examples" does not require that all examples include the discussed feature, advantage, or mode of operation. Use of the terms "in one example," "an example," "in one feature," and/or "a feature" in this specification does not necessarily refer to the same feature and/or example. Furthermore, a particular feature and/or structure can be combined with one or more other features and/or structures. Moreover, at least a portion of the apparatus described hereby can be configured to perform at least a portion of a method described hereby.

It should be noted that the terms "connected," "coupled," and any variant thereof, mean any connection or coupling between elements, either direct or indirect, and can encompass a presence of an intermediate element between two elements that are "connected" or "coupled" together via the intermediate element. Coupling and connection between the elements can be physical, logical, or a combination thereof. Elements can be "connected" or "coupled" together, for example, by using one or more wires, cables, printed electrical connections, electromagnetic energy, and the like. The electromagnetic energy can have a wavelength at a radio frequency, a microwave frequency, a visible optical frequency, an invisible optical frequency, and the like, as practicable. These are several non-limiting and non-exhaustive examples.

The term "signal" can include any signal such as a data signal, an audio signal, a video signal, a multimedia signal, an analog signal, a digital signal, and the like. Information and signals described herein can be represented using any of a variety of different technologies and techniques. For example, data, an instruction, a process step, a command, information, a signal, a bit, a symbol, and the like that are references herein can be represented by a voltage, a current, an electromagnetic wave, a magnetic field, a magnetic particle, an optical field, and optical particle, and/or any practical combination thereof, depending at least in part on the particular application, at least in part on the desired design, at least in part on the corresponding technology, and/or at least in part on like factors.

A reference using a designation such as "first," "second," and so forth does not limit either the quantity or the order of those elements. Rather, these designations are used as a convenient method of distinguishing between two or more elements or instances of an element. Thus, a reference to first and second elements does not mean that only two elements can be employed, or that the first element must necessarily precede the second element. Also, unless stated otherwise, a set of elements can comprise one or more elements. In addition, terminology of the form "at least one of: A, B, or C" or "one or more of A, B, or C" or "at least one of the group consisting of A, B, and C" used in the description or the claims can be interpreted as "A or B or C or any combination of these elements." For example, this terminology can include A, or B, or C, or A and B, or A and C, or A and B and C, or 2A, or 2B, or 2C, and so on.

The terminology used herein is for the purpose of describing particular examples only and is not intended to be limiting. As used herein, the singular forms "a," "an," and "the" include the plural forms as well, unless the context clearly indicates otherwise. Further, the terms "comprises," "comprising," "includes," and "including," specify a presence of a feature, an integer, a step, an operation, an element, a component, and the like, but do not necessarily preclude a presence or an addition of another feature, integer, step, operation, element, component, and the like.

The term "mobile device" can describe, and is not limited to, at least one of a mobile phone, a mobile communication device, a pager, a personal digital assistant, a personal information manager, a personal data assistant, a mobile hand-held computer, a portable computer, a tablet computer, a wireless device, a wireless modem, other types of portable electronic devices typically carried by a person and having communication capabilities (e.g., wireless, cellular, infrared, short-range radio, etc.), similar personal electronic devices which have SMS capabilities, or a combination thereof. Further, the terms "user equipment" (UE), mobile equipment (ME), "mobile terminal," "user device," "mobile device," and "wireless device" can be interchangeable.

The term "server" can describe any of a variety of computer systems configured to operate in client-server architecture. In particular, the term "server" refers to at least one network server, such as Internet-accessible servers, which typically include at least one processor (e.g., a microprocessor, a microcontroller, a special-purpose processor, a digital signal processor (DSP), a field programmable gate array (FPGA), a programmable logic device (PLD), an application-specific integrated circuit (ASIC), a controller, a non-generic special-purpose processor, a state machine, gated logic, a discrete hardware component, a dedicated hardware finite state machine, and any other suitable entity that can at least one of manipulate information (e.g., calculating, logical operations, and the like) and control another device, or a combination thereof.), at least one memory (e.g., hard disk memory), and at least one network interface circuit configured to couple the server processor(s) to a network, such as the Internet, an instant messaging network, a simple messaging system network, a cellular telephone network, a WiFi network, and the like.

### DESCRIPTION OF THE FIGURES

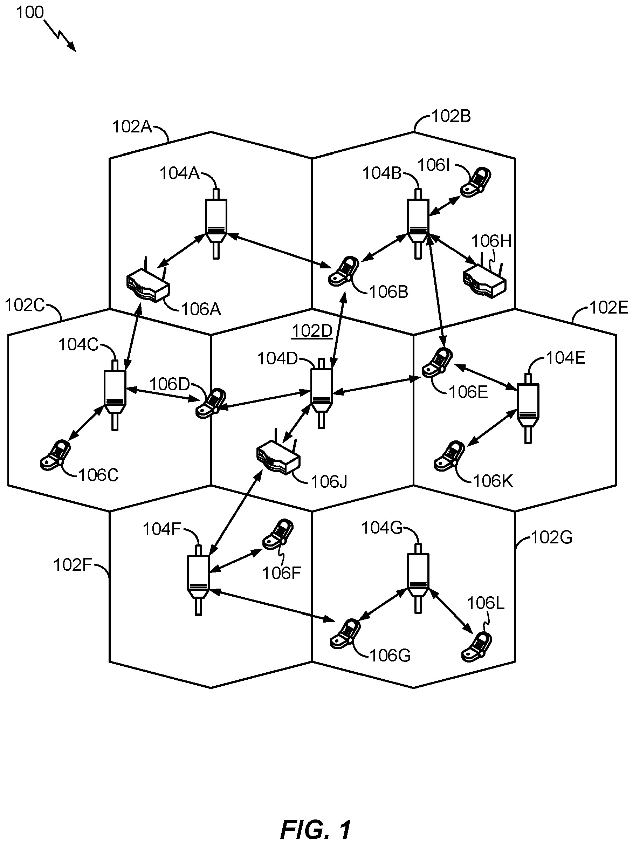

FIG. 1 depicts an exemplary wireless communication network 100. The wireless communication network 100 is configured to support multiple access communication between multiple users. As shown, the wireless communication network 100 can be divided into one or more cells 102A-102G. One or more access points 104A-104G provide communication coverage in corresponding cells 102A-102G. The access points 104A-104G can interact with at least one user device in a plurality of user devices 106A-106L.

Each user device 106A-106L can communicate with one or more of the access points 104A-104G via a downlink (DL) and/or an uplink (UL). In general, a DL is a communication link from an access point to a user device, while an UL is a communication link from a user device to an access point. The access points 104A-104G can be coupled to each other and/or other network equipment via wired or wireless interfaces, allowing the access points 104A-104G to communicate with each other and/or the other network equipment. Accordingly, each user device 106A-106L can also communicate with another user device 106A-106L via one or more of the access points 104A-104G. For example, the user device 106J can communicate with the user device 106H in the following manner: the user device 106J can communicate with the access point 104D, the access point 104D can communicate with the access point 104B, and the access point 104B can communicate with the user device 106H, allowing communication to be established between the user device 106J and the user device 106H.

A wireless communication network, such as the wireless communication network 100, can provide service over a geographic region ranging from small to large. For example, the cells 102A-102G can cover a few blocks within a neighborhood or several square miles in a rural environment. In some systems, each of the cells 102A-102G can be further divided into one or more sectors (not shown in FIG. 1). In addition, the access points 104A-104G can provide the user devices 106A-106L within their respective coverage areas (i.e., respective cells 102A-102G) with access to other communication networks, such as at least one of the Internet, a cellular network, a private network, and the like. In the example shown in FIG. 1, the user devices 106A, 106H, and 106J comprise routers, while the user devices 106B-106G, 106I, 106K, and 106L comprise mobile phones. However, each of the user devices 106A-106L can comprise any suitable communication device.

At least a portion of the apparatus disclosed herein can be a part of at least one of the access points 104A-104G and/or by at least one of the user devices 106A-106L. Also, at least a portion of the methods disclosed herein can be performed by at least one of the access points 104A-104G and/or by at least one of the user devices 106A-106L. Further, embodiments of the disclosure can be practicably employed in a device configured to process data relating to mobile-originated short message services.

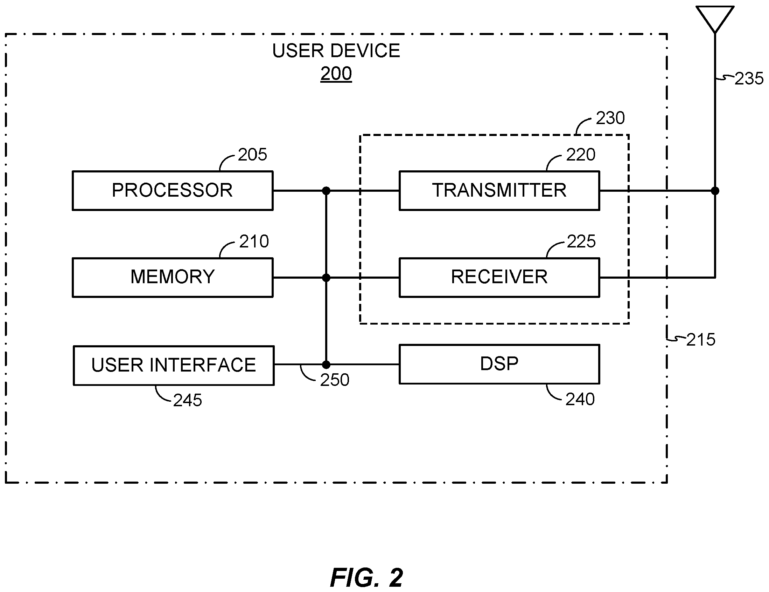

FIG. 2 depicts an exemplary functional block diagram of exemplary mobile equipment 200, which can correspond to at least one of the user devices 106A-106L. FIG. 2 also depicts different components that can a part of the mobile equipment 200. The mobile equipment 200 is an example of a device that can be configured to include at least a portion of the apparatus described herein.

The mobile equipment 200 can include a processor 205 which is configured to control operation of the mobile equipment 200, including performing at least a part of a method described herein. The processor 205 can also be referred to as a central processing unit (CPU), a special-purpose processor, or both. A memory 210, which can include at least one of read-only memory (ROM) and random access memory (RAM) provides at least one of instructions and data to the processor 205. The processor 205 can perform logical and arithmetic operations based on processor-executable instructions stored within the memory 210. The instructions stored in the memory 210 can be executed to implement at least a part of a method described herein. The memory 210 can store data describing an FDN list. The FDN list is a part of a Fixed Dialing feature (e.g., FDN mode). The Fixed Dialing feature is a mechanism implementing an electronic lock to bar the mobile equipment 200 from calling and sending an SMS communication to any destination numbers other than those that are pre-programmed on the FDN list. The user of the mobile equipment 200 (e.g., a child, an employee, etc.) may not be able to disable the FDN mode of the mobile equipment 200.

The processor 205 can comprise or be a component of a processing system implemented with one or more processors. The one or more processors can be implemented with a microprocessor, a microcontroller, a digital signal processor (DSP), a field programmable gate array (FPGA), a programmable logic device (PLD), an application-specific integrated circuit (ASIC), a controller, a non-generic special-purpose processor, a state machine, gated logic, a discrete hardware component, a dedicated hardware finite state machine, and any other suitable entity that can at least one of manipulate information (e.g., calculating, logical operations, and the like) and control another device, or a combination thereof. The processing system can also include a non-transitory machine-readable media (e.g., the memory 210) that stores software. Software can mean any type of instructions, whether referred to as at least one of software, firmware, middleware, microcode, hardware description language, and the like. Instructions can include code (e.g., in source code format, binary code format, executable code format, or any other suitable code format). The instructions are processor-executable and are configured to perform at least a portion of a method described hereby. The instructions, when executed by the processor 205, can transform the processor 205 into a special-purpose processor that causes the processor to perform at least a part of a function described hereby.

The mobile equipment 200 can also include a housing 215, a transmitter 220, and a receiver 225 to allow transmission and reception of data between the mobile equipment 200 and a remote location. The transmitter 220 and the receiver 225 can be combined into a transceiver 230. An antenna 235 can be attached to the housing 215 and electrically coupled to the transceiver 230. The mobile equipment 200 can also include (not shown in FIG. 2) multiple transmitters, multiple receivers, multiple transceivers, and/or multiple antennas.

The mobile equipment 200 can further comprise a digital signal processor (DSP) 240 that is configured to process data. The mobile equipment 200 can also further comprise a user interface 245. The user interface 245 can comprise a keypad, a microphone, a speaker, a display, or a combination thereof. The user interface 245 can include a component that at least one of conveys information to a user of the mobile equipment 200 and receives input from the user.

The components of the mobile equipment 200 can be coupled together by a bus system 250. The bus system 250 can include at least one of a data bus, a power bus, a control signal bus, a status signal bus, and the like. The components of the mobile equipment 200 can be coupled together to accept and/or provide inputs to each other using a different suitable mechanism.

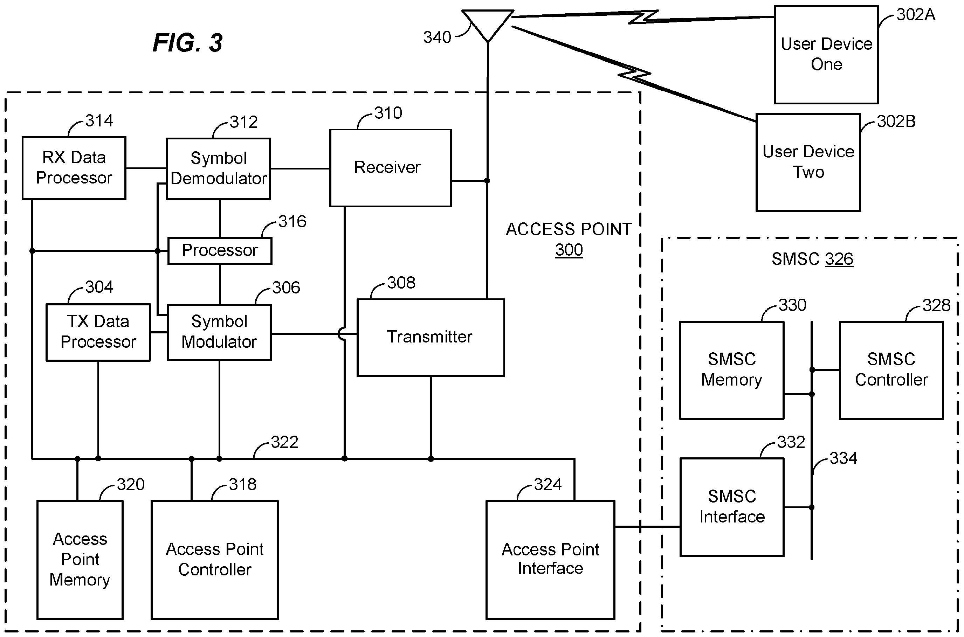

FIG. 3 depicts an exemplary access point 300 and a Short Messaging Service Center (SMSC) 326. The access point 300 can correspond to any of the access points 104A-104G. As shown, the access point 300 includes a transmit (TX) data processor 304, a symbol modulator 306, a transmitter unit (TMTR) 308, an antenna 340, a receiver unit (RCVR) 310, a symbol demodulator 312, a receive (RX) data processor 314, and a configuration information processor 316, each performing an operation associated with communicating with one or more user devices 302A-302B. The user devices 302A-302B can correspond to at least one user device in a plurality of user devices 106A-106L. The access point 300 can also include an access point controller 318 and an access point memory 320 configured to store related data or instructions. Together, via a bus system 322, these units can perform special-purpose processing in accordance with the appropriate radio communication technology, as well as other functions for the access point 300.

The access point controller 318 is configured to control operation of the access point 300. The access point controller 318 can also be referred to as a CPU, a special-purpose processor, or both. The access point memory 320, which can include at least one of ROM and RAM provides instructions and data to the access point controller 318. The access point controller 318 can perform logical and arithmetic operations based on program instructions stored within the access point memory 320. The instructions in the access point memory 320 can be executable to implement at least a part of a method described herein.

The access point controller 318 can comprise or be a component of a processing system implemented with one or more processors. The one or more processors can be implemented with a microprocessor, a microcontroller, a DSP, an FPGA, a PLD, an ASIC, a controller, a non-generic special-purpose processor, a state machine, gated logic, a discrete hardware component, a dedicated hardware finite state machine, and any other suitable entity that can at least one of manipulate information (e.g., calculating, logical operations, and the like) and control another device, or a combination thereof. The processing system can also include a non-transitory machine-readable media (e.g., the access point memory 320) that stores software. Software can mean any type of instructions, whether referred to as at least one of software, firmware, middleware, microcode, hardware description language, and the like. Instructions can include code (e.g., in source code format, binary code format, executable code format, or any other suitable code format). The instructions are processor-executable and are configured to perform at least a portion of a method described hereby. The instructions, when executed by the access point controller 318, can transform the access point controller 318 into a special-purpose processor that causes the processor to perform at least a part of a function described hereby.

The components of the access point 300 can be coupled together by the bus system 322. The bus system 322 can include at least one of a data bus, a power bus, a control signal bus, and a status signal bus. The components of the access point 300 can be coupled together to accept and/or provide inputs to each other using a different suitable mechanism.

The access point 300 can include an access point interface 324 that is configured to couple at least one of the constituent components of the access point 300 to the SMSC 326.

FIG. 3 also depicts the SMSC 326. In an example, the SMSC 326 includes an SMSC controller 328, an SMSC memory 330, an SMSC interface 332, and a bus system 334.

The SMSC controller 328 is configured to control operation of the SMSC 326. The SMSC controller 328 can also be referred to as a CPU, a special-purpose processor, or both. The SMSC memory 330, which can include at least one of ROM and RAM provides instructions and data to the SMSC controller 328. The SMSC controller 328 can perform logical and arithmetic operations based on program instructions stored within the SMSC memory 330. The instructions in the SMSC memory 330can be executable to implement at least a part of a method described herein.

The SMSC controller 328 can comprise or be a component of a processing system implemented with one or more processors. The one or more processors can be implemented with a microprocessor, a microcontroller, a DSP, an FPGA, a PLD, an ASIC, a controller, a non-generic special-purpose processor, a state machine, gated logic, a discrete hardware component, a dedicated hardware finite state machine, and any other suitable entity that can at least one of manipulate information (e.g., calculating, logical operations, and the like) and control another device, or a combination thereof. The processing system can also include a non-transitory machine-readable media (e.g., the SMSC memory 330) that stores software. Software can mean any type of instructions, whether referred to as at least one of software, firmware, middleware, microcode, hardware description language, and the like. Instructions can include code (e.g., in source code format, binary code format, executable code format, or any other suitable code format). The instructions are processor-executable and are configured to perform at least a portion of a method described hereby. The instructions, when executed by the SMSC controller 328, can transform the SMSC controller 328 into a special-purpose processor that causes the processor to perform at least a part of a function described hereby.

The components of the SMSC 326 can be coupled together by the bus system 334. The bus system 334 can include at least one of a data bus, a power bus, a control signal bus, and a status signal bus. The components of the SMSC 326 can be coupled together to accept and/or provide inputs to each other using a different suitable mechanism.

The SMSC 326 can include the SMSC interface 332 that is configured to couple at least one of the constituent components of the SMSC 326 to the access point 300.

The SMSC 326 controls and implements SMS operations for a network. The SMS operations can include receiving an SMS message, routing an SMS message (e.g., from a sender to a recipient), storing an SMS message for later delivery, forwarding an SMS message, reporting message delivery, or a combination thereof. For example, when a sender executes a send command for an inputted SMS message, the sender's communication device (e.g., the mobile equipment 200, and the like) transmits the SMS message over an air interface to a base station (e.g., one of access points 104A-104G) that is operating within a service provider's communication network. The base station relays the SMS message to the SMSC 326 which supports SMS communications for the service provider's network. The SMSC 326 then either forwards the SMS message to the messages' recipient immediately, or, if the recipient is unavailable, the SMSC 326 performs a technique known as "store-and-forward," in which the SMSC 326 stores the SMS message until the recipient's device is available, and then subsequently forwards the SMS message to the recipient when the recipient's device is available.

In order for the sender's communication device to contact the SMSC 326, the sender's communication device must know the address of the SMSC 326. The address of the SMSC 326 can be a telephone number or another alphanumeric identifier. The address of the SMSC 326 can be stored in a sender's communication device memory (e.g., a SIM card, a USIM card, the memory 210, the like, or a combination thereof) that is a part of, or coupled to (e.g., inserted in), the sender's communication device. The SMSC address of the sender's home service provider network serving the sender's communication device can be pre-programmed in the sender's communication device memory by the sender's home service provider network. The pre-programming can occur during initial provisioning of the sender's communication device. The pre-programming can also occur during an OTA update of the sender's communication device by the sender's home service provider network.

Conventionally, when the sender's communication device is roaming on a different service provider's communication network in which the sender is not subscriber, the SMSC address of the different service provider's communication network must be added manually to the sender's communication device's FDN list to send an SMS message to the recipient.

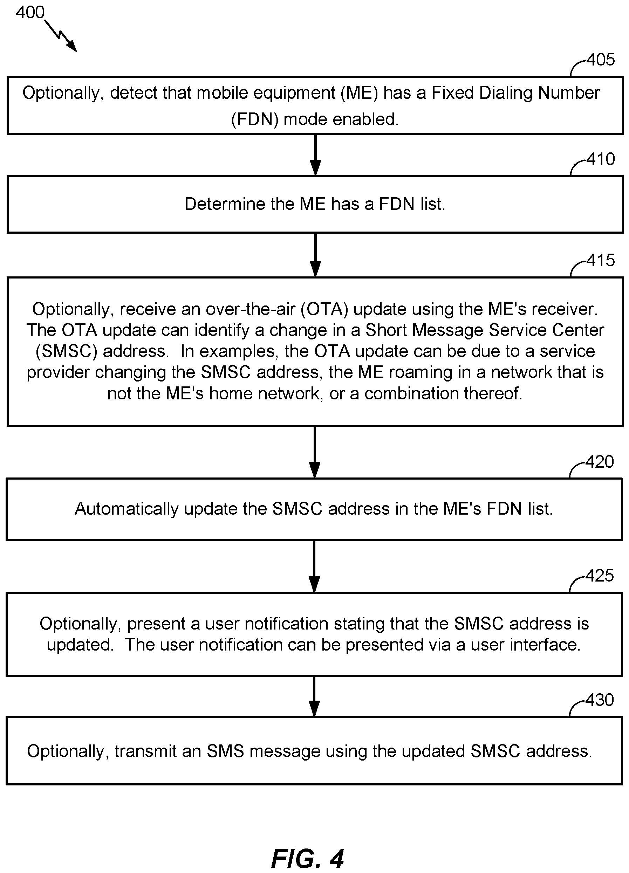

FIG. 4 depicts an exemplary method 400 for improving SMS availability by ME having a receiver. The method 400 can be performed by the apparatus described hereby, such as at least one of the user devices 106A-106L. In an example, the method 400 can be performed by the apparatus described hereby when the apparatus is roaming in a network that is not the ME's home network (e.g., coupled to a communication network that is not the apparatuses' home communication network).

In optional block 405, it is detected that the ME has a FDN mode enabled.

In block 410, it is determined the ME has a FDN list.

In optional block 415, an OTA update is received using the ME's receiver. The OTA update can identify a change in a SMSC address. The OTA update can be due to a service provider changing the SMSC address, the ME roaming in a network that is not the ME's home network, or a combination thereof.

In block 420, the SMSC address is automatically updated in the ME's FDN list. In a first case, when the ME is in a home network, an OTA update is not necessary, and the SMSC address is automatically updated in the FDN list. In a second case, when the service provider changes the SMSC address using an OTA, the SMSC address communicated by the OTA update is automatically updated in the FDN list. In a third case, when the ME is roaming in a network that is not the ME's home network and an OTA update is received, the SMSC address communicated by the OTA update is automatically updated in the ME's FDN list. Automatically updating the SMSC address in the ME's FDN list enables a user of the ME to send an MO-SMS seamlessly (the user need not manually enter the SMSC address every time an SMS is to be sent), even when the ME's FDN mode is enabled.

The updating of the SMSC address in the ME's FDN list can include adding the SMSC address to the FDN list, with or without replacing another SMSC address. The updating of the SMSC address can occur without user intervention such as the user manually performing any task (such as manual entry of a number) to update of the SMSC address in the ME's FDN list. In an example, the user can choose whether to update the SMSC address in the ME's FDN list manually or to have the ME automatically update the SMSC address in the ME's FDN list. The updating can include writing the updated SMSC address to the ME's memory (e.g., a SIM card, a USIM card, the memory 210, or the like). In an example, the updating can include downloading an application from a serving communication network. The application then updates the SMSC address in the FDN list.

In optional block 425, a user notification stating that the SMSC address is updated is presented via a user interface. The user notification can take a form of a "pop-up" message, an SMS message, or the like.

In optional block 430, an SMS message is transmitted using the updated SMSC address.

The foregoing blocks are not limiting of the examples. The blocks can be combined and/or the order can be rearranged, as practicable.

In a further method, the ME can detect that the ME's FDN mode is enabled and then skip an SMSC address check for numbers in the ME's FDN list. This method does not require user intervention, such as the user manually performing any task (such as manual entry of a number) to update of the SMSC address in the ME's FDN list.

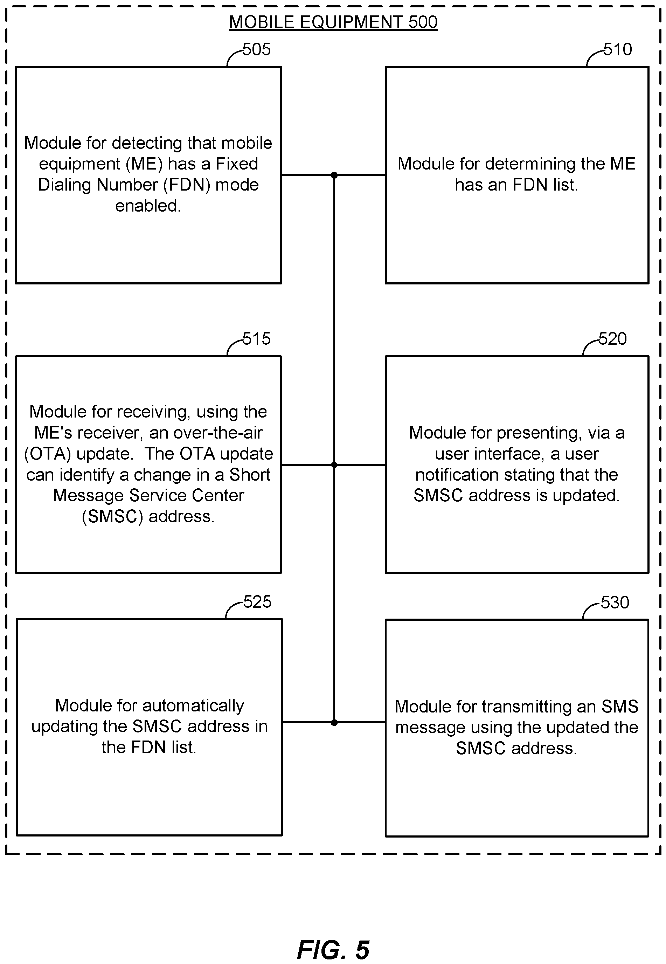

FIG. 5 depicts an exemplary ME 500 (e.g., corresponding to the mobile equipment 200) represented as a series of interrelated functional modules. A module for detecting that the ME has an FDN mode enabled 505 can correspond at least in some aspects to, for example, a communication device as discussed herein. A module for determining the ME has a FDN list 510 can correspond at least in some aspects to, for example, a communication device as discussed herein. A module for receiving, using the ME's receiver, an over-the-air update 515 can correspond at least in some aspects to, for example, a communication device as discussed herein. A module for presenting, via a user interface, a user notification stating that the SMSC address is updated 520 can correspond at least in some aspects to, for example, a communication device as discussed herein. A module for automatically updating the SMSC address in the FDN list 525 can correspond at least in some aspects to, for example, a communication device as discussed herein. A module for transmitting an SMS message using the updated the SMSC address 530 can correspond at least in some aspects to, for example, a communication device as discussed herein.

Further, those of skill in the art will appreciate that the exemplary logical blocks, modules, circuits, and steps described in the examples disclosed herein can be implemented as electronic hardware, computer software, or combinations of both, as practicable. To clearly illustrate this interchangeability of hardware and software, exemplary components, blocks, modules, circuits, and steps have been described herein generally in terms of their functionality. Whether such functionality is implemented as hardware or software depends upon the particular application and design constraints imposed on an overall system. Skilled artisans can implement the described functionality in different ways for each particular application, but such implementation decisions should not be interpreted as causing a departure from the scope of the present disclosure.

In some aspects, the teachings herein can be employed in a multiple-access system capable of supporting communication with multiple users by sharing the available system resources (e.g., by specifying one or more of bandwidth, transmit power, coding, interleaving, and so on). For example, the teachings herein can be applied to any one or combinations of the following technologies: Code Division Multiple Access (CDMA) systems, Multiple-Carrier CDMA (MCCDMA), Wideband CDMA (W-CDMA), High-Speed Packet Access (HSPA, HSPA+) systems, Time Division Multiple Access (TDMA) systems, Frequency Division Multiple Access (FDMA) systems, Single-Carrier FDMA (SC-FDMA) systems, Orthogonal Frequency Division Multiple Access (OFDMA) systems, or other multiple access techniques. A wireless communication system employing the teachings herein can be designed to implement one or more standards, such as IS-95, cdma2000, IS-856, W-CDMA, TDSCDMA, and other standards. A CDMA network can implement a radio technology such as Universal Terrestrial Radio Access (UTRA), cdma2000, or some other technology. UTRA includes W-CDMA and Low Chip Rate (LCR). The cdma2000 technology covers IS-2000, IS-95 and IS-856 standards. A TDMA network can implement a radio technology such as Global System for Mobile Communications (GSM). An OFDMA network can implement a radio technology such as Evolved UTRA (E-UTRA), IEEE 802.11, IEEE 802.16, IEEE 802.20, Flash-OFDM.RTM., etc. UTRA, E-UTRA, and GSM are part of Universal Mobile Telecommunication System (UMTS). The teachings herein can be implemented in a 3GPP Long Term Evolution (LTE) system, an Ultra-Mobile Broadband (UMB) system, and other types of systems. LTE is a release of UMTS that uses E-UTRA. UTRA, E-UTRA, GSM, UMTS and LTE are described in documents from an organization named "3rd Generation Partnership Project" (3GPP), while cdma2000 is described in documents from an organization named "3rd Generation Partnership Project 2" (3GPP2). Although certain aspects of the disclosure can be described using 3GPP terminology, it is to be understood that the teachings herein can be applied to 3GPP (e.g., Re199, Re15, Re16, Re17) technology, as well as 3GPP2 (e.g., 1xRTT, 1xEV-DO RelO, RevA, RevB) technology and other technologies. The techniques can be used in emerging and future networks and interfaces, including Long Term Evolution (LTE).

At least a portion of the methods, sequences, and/or algorithms described in connection with the examples disclosed herein can be embodied directly in hardware, in software executed by a processor (e.g., a processor described hereby), or in a combination of the two. In an example, a processor includes multiple discrete hardware components. A software module can reside in a storage medium (e.g., a memory device), such as a random-access memory (RAM), a flash memory, a read-only memory (ROM), an erasable programmable read-only memory (EPROM), an electrically erasable programmable read-only memory (EEPROM), a register, a hard disk, a removable disk, a compact disc read-only memory (CD-ROM), a Subscriber Identity Module (SIM) card, a Universal Subscriber Identity Module (USIM) card, and/or any other form of storage medium. An exemplary storage medium (e.g., a memory device) can be coupled to the processor such that the processor can read information from, and/or write information to, the storage medium. In an example, the storage medium can be integral with the processor.

Further, examples provided hereby are described in terms of sequences of actions to be performed by, for example, elements of a computing device. The actions described herein can be performed by a specific circuit (e.g., an application specific integrated circuit (ASIC)), by program instructions being executed by one or more processors, or by a combination of both. Additionally, a sequence of actions described herein can be considered to be entirely within any form of computer readable storage medium having stored therein a corresponding set of computer instructions that, upon execution, would cause an associated processor (such as a special-purpose processor) to perform at least a portion of a function described herein. Thus, examples may be in a number of different forms, all of which have been contemplated to be within the scope of the disclosure. In addition, for each of the examples described herein, a corresponding electrical circuit of any such examples may be described herein as, for example, "logic configured to" perform a described action.

The disclosed devices and methods can be designed and can be configured into a computer-executable file that is in a Graphic Database System Two (GDSII) compatible format, an Open Artwork System Interchange Standard (OASIS) compatible format, and/or a GERBER (e.g., RS-274D, RS-274X, etc.) compatible format, which can be stored on a non-transitory (i.e., a non-transient) computer-readable media. The file can be provided to a fabrication handler who fabricates with a lithographic device, based on the file, an integrated device. Deposition of a material to form at least a portion of a structure described herein can be performed using deposition techniques such as physical vapor deposition (PVD, e.g., sputtering), plasma-enhanced chemical vapor deposition (PECVD), thermal chemical vapor deposition (thermal CVD), and/or spin-coating, and the like. Etching of a material to form at least a portion of a structure described herein can be performed using etching techniques such as plasma etching. In an example, the integrated device is on a semiconductor wafer. The semiconductor wafer can be cut into a semiconductor die and packaged into a semiconductor chip. The semiconductor chip can be employed in a device described herein (e.g., a mobile device, an access device, mobile equipment, and/or the like).

At least one example provided hereby can include a non-transitory (i.e., a non-transient) machine-readable media and/or a non-transitory (i.e., a non-transient) computer-readable media storing processor-executable instructions configured to cause a processor (e.g., a special-purpose processor) to transform the processor and any other cooperating devices into a machine (e.g., a special-purpose processor) configured to perform at least a part of a function described hereby. Performing at least a part of a function described hereby can include initiating at least a part of a function described hereby. In an example, execution of the stored instructions can transform a processor and any other cooperating devices into at least a part of an apparatus described hereby. A non-transitory (i.e., a non-transient) machine-readable media specifically excludes a transitory propagating signal. Further, at least one embodiment of the invention can include a computer readable media embodying at least a part of a method described herein. Accordingly, any means for performing the functions described herein are included in at least one embodiment of the invention.

Nothing stated or depicted in this application is intended to dedicate any component, step, feature, object, benefit, advantage, or equivalent to the public, regardless of whether the component, step, feature, object, benefit, advantage, or the equivalent is recited in the claims.

While this disclosure describes examples, changes and modifications can be made to the examples disclosed herein without departing from the scope defined by the appended claims. The present disclosure is not intended to be limited to the specifically disclosed examples alone.

## Claims

1. A method for improving Short Message Service, SMS, availability by mobile equipment, ME, (200) having a receiver (225), comprising:
determining (410) the ME has a Fixed Dialing Number, FDN, list; **characterised by**
automatically updating (420) a Short Message Service Center, SMSC, address in the ME's FDN list.

2. The method of claim 1, further comprising receiving (415), using the ME's receiver, an over-the-air, OTA, update identifying a change in the SMSC address, wherein the OTA update is due to:
a service provider changing the SMSC address;
the ME roaming in a network that is not a home network of the ME; or
a combination thereof.

3. The method of claim 1, further comprising detecting (405) that the ME has an FDN mode enabled.

4. The method of claim 1, further comprising transmitting (430) an SMS message using the updated SMSC address.

5. The method of claim 1, further comprising presenting (425), via a user interface, a user notification stating that the SMSC address is updated.

6. The method of claim 1, wherein the updating of the SMSC address in the ME's FDN list includes adding a new SMSC address to the ME's FDN list.

7. An apparatus (200) configured to improve Short Message Service (SMS) availability by mobile equipment, ME, (200) having a receiver (225), comprising:
means (205, 210) for determining (410) the ME has a Fixed Dialing Number, FDN, list; **characterised by**
means (205, 210) for automatically updating (420) a Short Message Service Center, SMSC, address in the ME's FDN list.

8. The apparatus of claim 7, further comprising means for receiving (415), using the ME's receiver, an over-the-air, OTA, update identifying a change in the SMSC address due to the ME roaming, wherein the OTA update is due to:
a service provider changing the SMSC address;
the ME roaming in a network that is not a home network of the ME; or
a combination thereof.

9. The apparatus of claim 7, further comprising means for detecting (405) that the ME has an FDN mode enabled.

10. The apparatus of claim 7, further comprising means for transmitting (430) an SMS message using the updated SMSC address.

11. The apparatus of claim 7, further comprising means for presenting (425), via a user interface, a user notification stating that the SMSC address is updated.

12. The apparatus of claim 7, wherein the means for automatically updating of the SMSC address in the ME's FDN list includes means for adding a new SMSC address to the ME's FDN list.

13. The apparatus of claim 7, wherein at least a part of the means for automatically updating the SMSC address is integrated on a semiconductor die.

14. The apparatus of claim 7, further comprising mobile equipment, of which the means for automatically updating the SMSC is a constituent part.

15. A non-transitory computer-readable medium (210) for improving Short Message Service, SMS, availability by mobile equipment, ME, (200) having a receiver (225), comprising processor-executable instructions stored thereon arranged to perform the steps of any one of claims 1 to 6.

## Patentansprüche

1. Verfahren zur Verbesserung der Verfügbarkeit für Kurznachrichtendienste bzw. SMS-Verfügbarkeit (SMS = Short Message Service) durch eine mobile Einrichtung bzw. ME (ME = Mobile Equipment) (200), die einen Empfänger (225) aufweist, das Folgendes aufweist:
Bestimmen (410), dass die ME eine Rufnummernbeschränkungs- bzw. FDN-Liste (FDN = Fixed Dialing Number) aufweist, **gekennzeichnet durch** automatisches Aktualisieren (420) einer SMSC-Adresse (SMSC = Short Message Service Center) in der FDN-Liste des ME.

2. Verfahren gemäß Anspruch 1, das ferner das Empfangen (415) unter Verwendung des Empfängers der ME einer OTA-Aktualisierung (OTA = Over-The-Air) aufweist, die eine Veränderung in der SMSC-Adresse identifiziert, wobei die OTA-Aktualisierung dadurch bedingt ist, dass:
ein Dienstanbieter die SMSC-Adresse verändert;
das ME in einem Netzwerk ein Roaming betreibt, das nicht ein Heimnetzwerk des ME ist; oder
eine Kombination dieser vorliegt.

3. Verfahren gemäß Anspruch 1, das ferner das Detektieren (405) aufweist, dass das ME einen FDN-Modus aktiviert hat.

4. Verfahren gemäß Anspruch 1, das ferner das Übertragen (430) einer SMS-Nachricht unter Verwendung der aktualisierten SMSC-Adresse aufweist.

5. Verfahren gemäß Anspruch 1, das ferner das Darstellen (425) über eine Benutzerschnittstelle einer Benutzermitteilung aufweist, die mitteilt, dass die SMSC-Adresse aktualisiert wurde.

6. Verfahren gemäß Anspruch 1, wobei das Aktualisieren der SMSC-Adresse in der FDN-Liste des ME das Hinzufügen einer neuen SMSC-Adresse zu der FDN-Liste des ME aufweist.

7. Vorrichtung (200), die konfiguriert ist, um die SMS-Verfügbarkeit durch eine mobile Einrichtung bzw. ME (200), die einen Empfänger (225) aufweist, zu verbessern, die Folgendes aufweist:
Mittel (205, 210) zum Bestimmen (410), dass die ME eine Rufnummernbeschränkungs- bzw. FDN-Liste aufweist, **gekennzeichnet durch** Mittel (205, 210) zum automatischen Aktualisieren (420) einer SMSC-Adresse in der FDN-Liste des ME.

8. Vorrichtung gemäß Anspruch 7, die ferner Mittel zum Empfangen (415) unter Verwendung des Empfängers des ME einer OTA-Aktualisierung (OTA = O-ver-The-Air) aufweist, die eine Veränderung in der SMSC-Adresse aufgrund eines Roamings des ME identifiziert, wobei die OTA-Aktualisierung dadurch bedingt ist, dass:
ein Dienstanbieter die SMSC-Adresse verändert;
das ME in einem Netzwerk ein Roaming betreibt, das nicht ein Heimnetzwerk des ME ist; oder
eine Kombination dieser vorliegt.

9. Vorrichtung gemäß Anspruch 7, die ferner Mittel zum Detektieren (405) aufweist, dass die ME einen FDN-Modus aktiviert hat.

10. Vorrichtung gemäß Anspruch 7, die ferner Mittel zum Übertragen (430) einer SMS-Nachricht unter Verwendung der aktualisierten SMSC-Adresse aufweist.

11. Vorrichtung gemäß Anspruch 7, die ferner Mittel zum Darstellen (425) über eine Benutzerschnittstelle einer Benutzermitteilung aufweist, die mitteilt, dass die SMSC-Adresse aktualisiert wurde.

12. Vorrichtung gemäß Anspruch 7, wobei das Mittel zum automatischen Aktualisieren der SMSC-Adresse in der FDN-Liste des ME Mittel zum Hinzufügen einer neuen SMSC-Adresse zu der FDN-Liste des ME aufweist.

13. Vorrichtung gemäß Anspruch 7, wobei zumindest ein Teil der Mittel zum automatischen Aktualisieren der SMSC-Adresse auf ein Halbleiterplättchen bzw. -chip integriert ist.

14. Vorrichtung gemäß Anspruch 7, die ferner eine mobile Einrichtung aufweist, von der das Mittel zum automatischen Aktualisieren des SMSC ein Bestandteil ist.

15. Nicht-flüchtiges, computerlesbares Medium (210) zur Verbesserung der SMS-Verfügbarkeit durch eine mobile Einrichtung bzw. ME (200), die einen Empfänger (225) aufweist, das prozessorausführbare Anweisungen darauf gespeichert hat, die angeordnet sind, um die Schritte gemäß einem der Ansprüche 1 bis 6 auszuführen.

## Revendications

1. Procédé pour une amélioration de disponibilité de service de messages courts, SMS, par un équipement mobile, ME, (200) présentant un récepteur (225), comprenant :
une détermination (410) du fait que le ME présente une liste de numéros de composition fixe, FDN ; **caractérisé par**
une mise à jour (420) automatique d'une adresse de centre de service de messages courts, SMSC, dans la liste de FDN du ME.

2. Procédé selon la revendication 1, comprenant en outre une réception (415), en utilisant le récepteur du ME, d'une mise à jour par radio, OTA, identifiant un changement de l'adresse SMSC, dans lequel la mise à jour OTA est due :
au fait qu'un prestataire de services change l'adresse SMSC ;
au fait que le ME est en itinérance dans un réseau qui n'est pas un réseau domestique du ME ; ou
une combinaison de ceux-ci.

3. Procédé selon la revendication 1, comprenant en outre une détection (405) du fait que le ME présente un mode FDN activé.

4. Procédé selon la revendication 1, comprenant en outre une transmission (430) d'un message SMS en utilisant l'adresse SMSC mise à jour.

5. Procédé selon la revendication 1, comprenant en outre une présentation (425), par l'intermédiaire d'une interface d'utilisateur, d'une notification d'utilisateur indiquant que l'adresse SMSC est à jour.

6. Procédé selon la revendication 1, dans lequel la mise à jour de l'adresse SMSC dans la liste de FDN du ME inclut un ajout d'une nouvelle adresse SMSC à la liste de FDN du ME.

7. Appareil (200) configuré pour améliorer une disponibilité de service de messages courts (SMS) par un équipement mobile, ME, (200) présentant un récepteur (225), comprenant :
un moyen (205, 210) de détermination (410) du fait que le ME présente une liste de numéros de composition fixe, FDN ; **caractérisé par**
un moyen (205, 210) de mise à jour (420) automatique d'une adresse de centre de service de messages courts, SMSC, dans la liste de FDN du ME.

8. Appareil selon la revendication 7, comprenant en outre un moyen de réception (415), en utilisant le récepteur du ME, d'une mise à jour par radio, OTA, identifiant un changement de l'adresse SMSC dû au fait que le ME est en itinérance, dans lequel la mise à jour OTA est due :
au fait qu'un prestataire de services change l'adresse SMSC ;
au fait que le ME est en itinérance dans un réseau qui n'est pas un réseau domestique du ME ; ou
une combinaison de ceux-ci.

9. Appareil selon la revendication 7, comprenant en outre un moyen de détection (405) du fait que le ME présente un mode FDN activé.

10. Appareil selon la revendication 7, comprenant en outre un moyen de transmission (430) d'un message SMS en utilisant l'adresse SMSC mise à jour.

11. Appareil selon la revendication 7, comprenant en outre un moyen de présentation (425), par l'intermédiaire d'une interface d'utilisateur, d'une notification d'utilisateur indiquant que l'adresse SMSC est à jour.

12. Appareil selon la revendication 7, dans lequel le moyen de mise à jour automatique de l'adresse SMSC dans la liste de FDN du ME inclut un moyen d'ajout d'une nouvelle adresse SMSC à la liste de FDN du ME.

13. Appareil selon la revendication 7, dans lequel au moins une partie du moyen de mise à jour automatique de l'adresse SMSC est intégrée sur une puce semiconductrice.

14. Appareil selon la revendication 7, comprenant en outre un équipement mobile, duquel le moyen de mise à jour automatique du SMSC est un élément constitutif.

15. Support lisible par ordinateur non transitoire (210) pour une amélioration d'une disponibilité de service de messages courts, SMS, par un équipement mobile, ME, (200) présentant un récepteur (225), comprenant des instructions exécutables par processeur stockées dessus agencées pour une réalisation des étapes selon l'une quelconque des revendications 1 à 6.
